Europäisches Patentamt

European Patent Office

Office européen des brevets

(11) Publication number: **0 094 515**
**B1**

(12) **EUROPEAN PATENT SPECIFICATION**

(45) Date of publication of patent specification: **05.07.89**

(51) Int. Cl.⁴: **G 06 F 15/20**

(21) Application number: **83103803.9**

(22) Date of filing: **20.04.83**

(54) Method in word processing system for queuing cursored pages of a document.

(30) Priority: **17.05.82 US 379267**

(43) Date of publication of application:
**23.11.83 Bulletin 83/47**

(45) Publication of the grant of the patent:
**05.07.89 Bulletin 89/27**

(84) Designated Contracting States:
**DE FR GB IT**

(56) References cited:
**US-A-3 701 972**
**US-A-3 805 251**

**IBM TECHNICAL DISCLOSURE BULLETIN, vol.
18, no. 11, April 1976, page 3743, New York,
US; D.M. EPPERLY et al.: "Paging of text
storage in random-access memory"**

(73) Proprietor: **International Business Machines
Corporation
Old Orchard Road
Armonk, N.Y. 10504 (US)**

(72) Inventor: **Advani, Hira
11811 Carshalton
Austin Texas 78758 (US)**
Inventor: **Hooten, John Andrew
No 2 Longhorn Drive
Round Rock Texas 78664 (US)**
Inventor: **McKelley, Charles Robert, Jr.
13406 Wisterwood
Round Rock Texas 78646 (US)**

(74) Representative: **Bonin, Jean-Jacques
Compagnie IBM France Département de
Propriété Intellectuelle
F-06610 La Gaude (FR)**

Courier Press, Leamington Spa, England.

## Description

### Field of the Invention

The present invention pertains to word processing and more particularly to specifying pages of a document in a typing task to be printed when a subsequent print task is loaded.

### Description of the Prior Art

Numerous word processing systems have been developed for editing, processing and printing conventional alphanumeric text. Word processing is particularly useful in the revision of documents which have been previously created. When changes made in certain pages of a document do not require reprinting of the entire document, the operators productivity is enhanced if only revised pages have to be printed.

In a large memory word processing system, such as the IBM displaywriter, printing is a background task which runs concurrently with typing tasks so that pages of a document may be printed as the revisions are made. However, in less expensive word processing systems, the available memory size does not permit background printing and typing tasks to be processed concurrently. In such systems, documents must be printed in a separate printing task which is separately loaded into the memory after the typing task is completed. In systems in which the typing tasks and print tasks are not processed concurrently, but sequentially, a need arises for a method for specifying during a typing task selected (sequential or random) pages of a document to be printed during a subsequent print task so that the operator is not forced to write down or remember the pages to be printed at a later time.

US—A—3 701 972 relates to a method for queuing pages of a document in a word processing system during creation or revision of the document for printing in a subsequent task.

The pint task programme (Print mode) is summoned when creation or revision of the document is complete (Edit mode has been finished).

Document pages are designated with a page identification information (changing pointers) which are stored in a page queue so that sequential memory pages are allocated and printed on a first come first serve basis.

The system of US—A—3 701 972 does not sequentially store the page identification information each time the operator strikes a print key but only after the operator strikes 30 times a carriage return key.

### Brief Description of the Drawings

For a more complete understanding of the present invention and for further objects and advantages thereof, reference is now made to the following Detailed Description taken in conjunction with the accompanying Drawings in which:

Figure 1 is a perspective view illustrating a work station comprising a cathode ray tube display, screen and keyboard with a station connected to a main store consisting of a diskette storage unit;

Figure 2 is a block diagram of the functional units of the system illustrated in Figure 1;

Figure 3 is a logical flow chart illustrating the process of the present invention including the feature in which individual pages are designated for subseuqent printing during a typing task;

Figure 4 is a logical flow chart illustrating the process of the present invention including the feature in which the designated pages are printed in a print task overlay; and

Figure 5 is a logical flow chart illustrating the background printing process of the print task overlay.

### Summary of the Invention

According to the invention, a method in a word processing system is provided for queuing cursored pages of a document during creation or revision of the document, for printing in a subsequent print task. During the creation or revision of a document, the operator designates cursored pages of the document to be printed by striking the Print key. Page indentification information representing the name of the document, the disk where the document is stored and the page number to be printed is sequentially stored in a page print queue in the system memory. The operator continues to designate up to 25 pages to be printed until the document is completely created or revised. A set of print task programs is then loaded in the system. Page identification information in the page print queue is then retrieved from the system memory. Document pages corresponding to the page identification information stored in the page print queue are then printed on a first-in, first-out basis.

### Description of the Best Mode

The present invention provides a method for specifying up to 25 pages of a document to be printed in a subsequent printing task. This permits the operator to specify during a typing task only the selected pages of the document to be printed, making it unnecessary to print the entire document when only revised pages are desired. The pages may be queued sequentially, or randomly during the typing task. When the operator hits the print key, information identifying the document and specific page is saved and automatically placed in a page sprint queue which is stored in system memory to be later retrieved and used for printing during a print task overlay.

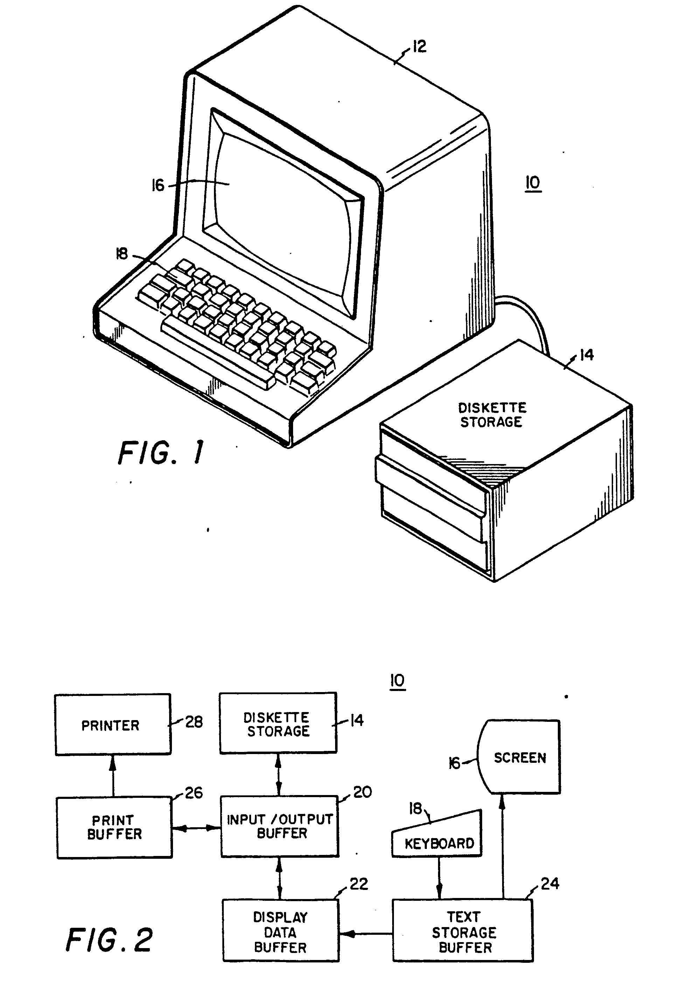

Referring now to Figure 1, there is illustrated an information processing system 10 which comprises a

2

work station 12 connected to an auxiliary store which in this system is a diskette storage 14. The work station 12 includes a display screen 16, which is typically a cathode ray tube. Work station 12 further includes a keyboard 18, which has keys for entering alphanumeric characters, as well as predefined commands.

In operation, the operator enters commands through keyboard 18 to call up information which is stored in diskette storage 14. The operators command may consist of one or more keystrokes. The information which is called up is displayed on a display screen 16 so that the operator can edit the displayed information to accomplish such tasks as entering new information, revising information, moving information from one location to another and deleting stored information. The operator also has the capability to manipulate the stored information to perform other operations, to select and modify records stored in the files in a diskette storage 14. Thus, the operator has the capability of carrying out conventional word processing editing together with the data based manipulations.

Referring now to Figure 2, there is illustrated a functional block diagram of the operational elements of the present system 10. The information flow is described as follows. A document file is stored in the diskette storage 14. The file is made up of the group of documents. Each document contains text fields which include alphanumeric and function characters as well as control characters used by the information processing system to indicated the nature and location of characters on the display screen 16. These control characters include, for example, line end codes, page end codes, tabs and carriage returns.

The operator enters a command into the work station 12 which causes a document to be read from the diskette storage 14. The document is transmitted to an input/output buffer 20 where it is temporarily stored. The document in the input/output buffer 20 is then transmitted to a data display buffer 22. The document in the data display buffer 22 is transferred to a text storage buffer 24. Screen 16 displays the information stored in text storage buffer 24. The displayed document is edited by the operator in entering commands and characters through keyboard 18 to alter the field stored in text storage buffer 24. After editing is completed, the text field in text storage buffer 24 is returned to display buffer 22 and incorporated into the text. This produces an edited document which the operator can then cause to be transferred into the intput/output buffer 20 for storage on the diskette storage 14. At a later time, when the print task function is selected by the operator, the edited documents are retrieved from the diskette storage 14 to the input/output buffer 20 where it is furnished to the print data buffer 26 and eventually printed out by the printer 28 under the interactive control of the operator by the method of the presnet invention.

After the system 10 had been initially powered and the basic assurance tests have been successfully completed and the system has been IPL'd, a task selection menu shown in Table I is displayed:

TABLE I

```
PRODSK|_____|_____|_____|_____|Kyb  ]___|_____
                            TASK SELECTION

                ID   ITEM

                a    Typing Tasks:
                       Create, or Revise Documents
                b    Work Diskette Tasks:
                       Delete or Duplicate Documents,
                       Duplicate, Condense or
                       Erase/Initialize (Name) Diskette, Change
                       Document or Diskette Name, Recover Documents
                c    Program Diskette Tasks:
                       Default Formats, Duplicate Setups,
                       Printer and Work Station Description,
                       Duplicate and Erase Program Diskette
                d    Paginate Task
                e    Print Tasks




Type ID letter to choose ITEM; press ENTER: ▯
```

EP 0 094 515 B1

Tasks are grouped into sets which have similar codes defined by the task selection menu. When a task selection menu is displayed, the operator selects a task by typing the appropriate ID on the prompt line and depressing the Enter key. Once the Enter key is depressed, the program for the selected task set will be loaded into the system unless it is already loaded. When a task set is completed, the operator is returned to the task selection menu to select a different task or reselect the same task.

In a word processing system, typical task sets include typing tasks, word diskette tasks, program diskette tasks and paginate tasks. In applications in which memory requirements do not permit printing tasks to be carried out concurrently with typing tasks, a separate set of print tasks programs must be loaded into the system following completion of the typing tasks. In systems with these requirements, print tasks must be one of the tasks sets which can be selected.

Of the various task sets identified above, typing tasks and the print tasks relate to the present invention. Typing tasks are concerned with the creation, revision and reformatting of documents. As a document is being created, revised or reformated, the operator will have the option to request that the cursored page be queued for printing by pressing the Print key. The page will be queued for printing and will begin printing (without the operator having to initiate printing of the queued pages) once the operator has selected the print task from the selection menu and the print task programs are loaded into the system.

When the Print key is depressed during a typing task to indicate that the cursored page is to be printed, an entry indentifying the document and the page to be printed will be made in the page print queue, unless it is full. When an entry is made in the page print queue, the system will display a message so indicating, or, if the queue is full, a message that the operator will not be able to queue any further pages for printing until the print task has been selected and the queued pages have been printed. In the preferred embodiment, the page print queue may contain entries for up to 25 pages of a single document which has been selected for printing. Printing of the pages of a document will be made on a first-in, first-out (FIFO) basis.

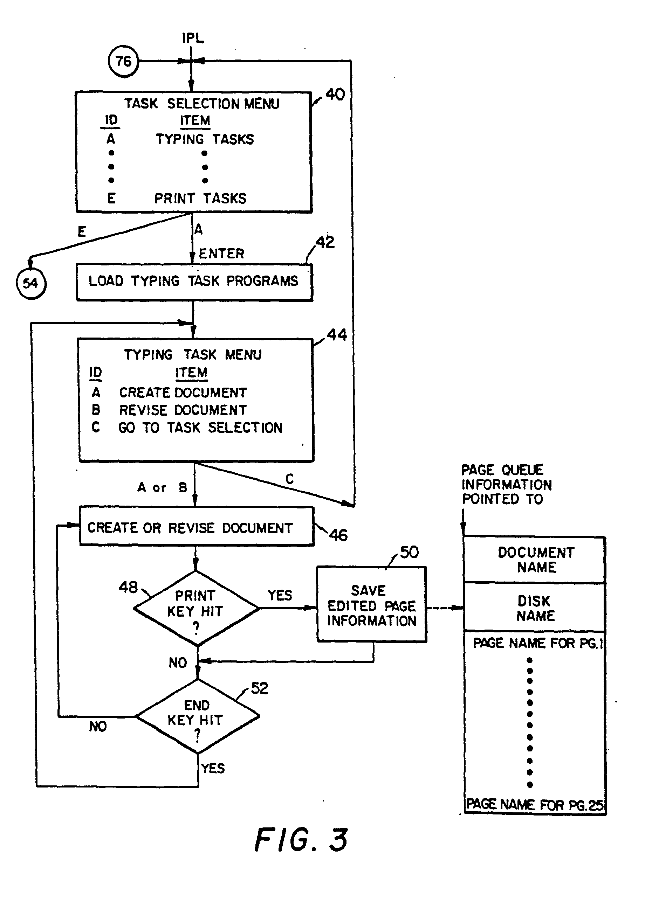

Reference is now made to Figure 3 which illustrates the logic of the page queuing feature. When the system has IPL'd, the task selection menu is displayed to the operator in step 40. When the typing task selection, item A is entered, the typing task programs are loaded into the system at step 42 and the typing task menu is displayed to the operator at step 44. At step 44, the operator selects item A or B indicating that a document is to be created or revised. As the operator is creating or revising a document, at step 46, the system determines at step 48 whether any keystroke has hit the Print key, indicating that the page should be printed. If so, indentifying information including the document name, disk name and page number of the cursored page of the document is stored in step 50. Since information identifying the document and the page must be stored so that it can be passed from a typing task to a printing task, the page print queue information is stored in the system memory. Since the addresses available for storage vary at any given time, a pointer containing the starting address of the page print queue is stored in the central vector table. By accessing the central vector table during a subsequent print task, the system can obtain the starting address of the page print queue and retrieve page identification information for the pages to be printed. The dotted line in Figure 3 indicates the sequential transfer of page identification information into the page print queue in the system memory.

After the page information has been stored at step 50 or if it has been determined that the Print key has not been activated by a particular keystroke, a determination is made at step 52 whether the End key, signifying the end of the document creation or revision, has been activated. If not, additional text is created on a new document page or revisions are made on a subsequent document page and processed as in step 46. If the End key has been activated at 52, the creation or revision task is terminated and the typing task menu is again displayed to the operator in step 44. If additional document creation and/or revision is necessary, an appropriate selection of item A or B is made at step 44 and the creation or revision task described above is repeated with pages being queued, if desired, and replacing any queued pages from a previous document. Otherwise, the operator selects item C, the "go to task" selection, which terminates all typing tasks and causes the task selection menu to be displayed at step 40. At this point, another task will be selected from the menu at step 40.

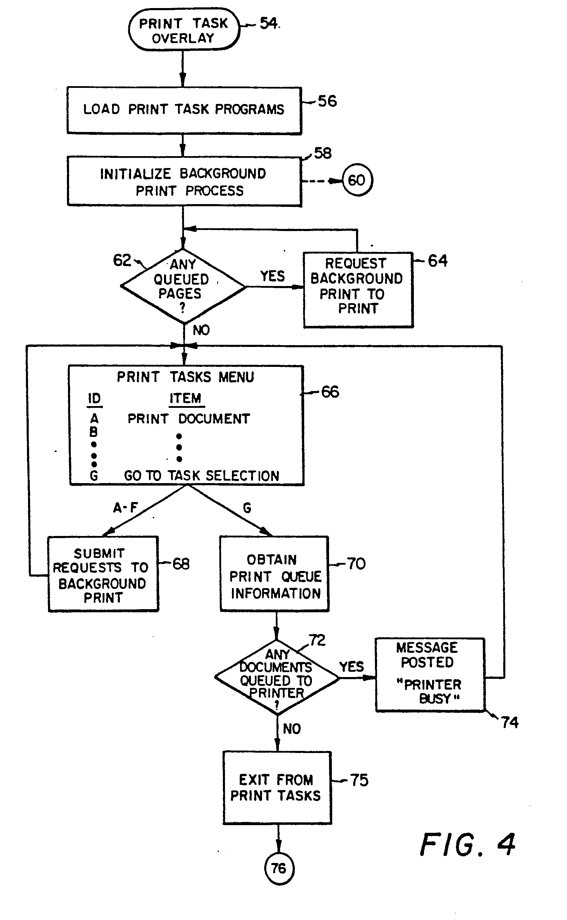

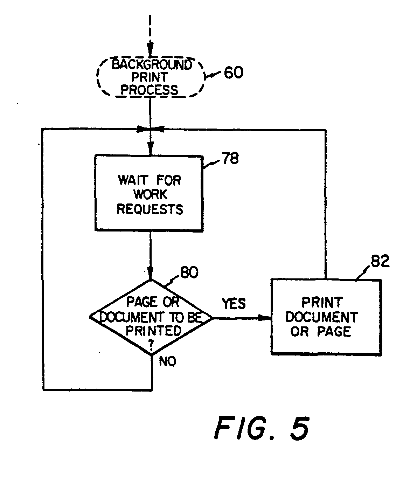

If the print task, item E of the menu, is now selected from the task selection menu, they system proceeds to the print task overlay 54, illustrated in Figure 4. As best seen in Figure 4, the print task programs are loaded at step 56 and at step 58, the background printing process 60 (Figure 5) is initialized.

At step 62, the page print queue is interrogated to determine if any queued pages have been specified. If so, a request is sent at step 64 to the background printing process 60, which causes the first queued page to begin printing. The queue meanwhile is again interrogated and the process is repeated on a first-in, first-out basis until all queued pages have been submitted to the background print process for printing. If no pages were specified, or once all queued pages have been submitted to the background print process, the print task menu is displayed to the operator at step 66. This gives the operator an additional opportunity to submit documents to be printed to a document print queue, to change the order of the document print queue or delete a document in the document print queue.

Request A—C pertaining to submissions, deletions or changes to the document print queue are submitted as indicated generally in step 68. When one of these specific requests has been executed, the print task menu is again displayed and another task is selected, or the same task is reselected. When no further operator interaction with the document print queue is desired, the operator selects the "go to task" selection G. At step 70, the document print queue information is obtained and interrogated at step 72 to determine if any documents have been queued. If so, a message is posted at step 74 indicating that the printer is busy and the print task menu is displayed, since the print task is a foreground task and all related activity in this task must have been completed before exiting the print tasks. When no documents are queued to the printer, exit is made from the print task programs at step 75 and the operator is returned to the task selection menu by a path 76 to reselect the next task.

Figure 5 illustrates the background printing process 60 which operates asynchronously with respect to the foreground printing tasks which provide operator interaction with the printed queue. Once initialized at step 58, process 60 waits at step 78 for a work request until a request is received at step 64. At step 80, the program interrogates the page print queue or document print queue to determine if a page or document has been specified for printing. If so, the page or document is printed at step 82 and the program awaits at step 78 until a new request is received. This process is repeated until the operator exits from the print tasks at 75 and the background print process is terminated.

The present invention thus provide a method of designating specific pages in a document to be printed while the operator is executing a typing task such as creating or revising a document. Page identification information corresponding to the specified pages is sequentially placed in a page print queue in the system memory and the pages are subsequently printed out when the typing tasks are completed and the printing tasks programs are loaded. This occurs in a background printing process in conjunction with operator submission of queued documents for printing.

Whereas the present invention has been described by reference to specific embodiments thereof, it will be understood that the man skilled in the art may make any change by equivalent means such as, for example, any other type of storage or input/output devices (for example other type of devices for displaying, inputting, recording data) without departing from the scope of the application as defined by the claims.

## Claims

1. Method in a word processing system for queuing cursored pages of a document during creation or revision of the document for printing in a subsequent print task, said method comprising the steps of:

a) designating cursored pages of a document to be printed when a print key is striked during creation or revision of the cursored pages displayed by the system to the operator during the performance of a typing task;

b) sequentially storing page identification information representing the cursored page in a page print queue each time the operator strikes the print key in step (a);

c) loading a set of print task program when creation or revision of the document is complete;

d) obtaining page identification information stored in the page print queue in step (b);

e) sequentially printing document pages corresponding to the page identification information stored in said page print queue in step (b) on a first-in, first-out basis.

2. Method according to claim 1 characterized in that said page identification information includes the document name, the disk where said document is stored and the page number of the document to be printed.

3. Method according to claim 1 or 2 characterized in that said page print queue is stored in the system memory during creation or revision of a document and is retrieved from said system memory after said print tasks are loaded.

4. Method according to any one of claims 1 to 3 characterized in that print queue contains information designating up to 25 designated pages to be printed.

5. Method according to claim 4 characterized in that said designated pages can be in random or sequential document page order.

### Patentansprüche

1. Methode, um in einem Textverarbeitungssystem während der Erarbeitung oder Aktualisierung eines Dokuments gekennzeichnete Seiten davon in eine Warteschlange einzureihen, damit sie in einem nachfolgenden Arbeitsgang gedruckt werden, wobei diese Methode folgende Schritte umfasst:

a) Bezeichnung der markierten Seiten eines durch Betätigung einer Drucktaste zu druckenden Dokuments während der Erarbeitung oder Aktualisierung dieser markierten Seiten, die dem Operator von dem genannten System im Laufe eines Schreibvorgangs dargestellt werden;

b) Sequentielles Speichern der Seitenidentifizierungsinformation, die jedesmal die markierten Seiten in einer Seitendruck-Warteschlange darstellt, wenn der Operator die Drucktaste in Schritt a) betätigt;

c) Laden eines Satzes mit einem Druckaufgabenprogramm, sobald die Erarbeitung oder Aktualisierung des Dokuments beendet ist;

d) Erhalt der Seitenidentifizierungsinformation, die in Schritt b) in der Seitendruck-Warteschlange gespeichert wurde;

e) Sequentielles Drucken der Dokumentseiten gemäss der Seitenidentifizierungsinformation, die in Schritt b) in der Seitendruck-Warteschlange gespeichert wurde, nach dem Prinzip "Zuerst eingelesen, zuerst ausgegeben".

2. Methode nach Anspruch 1, dadurch gekennzeichnet, dass die genannten Seitenidentifizierungsinformation den Namen des Dokuments, die Platte mit dem gespeicherten Dokument und die Seitennummer des zu druckenden Dokuments beinhaltet.

3. Methode nach Anspruch 1 oder 2, dadurch gekennzeichnet, dass die genannte Seitendruck-Warteschlange während der Erarbeitung oder Aktualisierung in den Systemspeicher eingelesen wird und dass sie aus dem genannten Systemspeicher geholt wird, nachdem die genannten Druckaufgaben eingespeichert wurden.

4. Methode nach allen der Ansprüche 1 bis 3, dadurch gekennzeichnet, dass die Druckschlange Informationen enthält, die bis zu 25 bezeichnete Seiten drucken können.

5. Methode nach Anspruch 4, dadurch gekennzeichnet, dass die genannten bezeichneten Seiten in beliebiger Reihenfolge oder in sequentieller Nummern-Reihenfolge des Dokuments gedruckt werden können.

**Revendications**

1. Méthode de mise en file d'attente de pages d'un document marquées par un curseur dans un système de traitement de mots pendant la création ou la révision du document pour son impression au cours de l'exécution d'une tâche d'impression suivante, ladite méthode comprenant les étapes suivantes:

a) la désignation de pages d'un document marquées par un curseur à imprimer lorsqu'une touche d'impression est enfoncée pendant la création ou la révision des pages marquées par un curseur et affichées par le système pour l'opérateur pendant l'exécution d'une tâche d'impression,

b) l'emmagasinage séquentiel d'informations d'identification de pages représentant la page marquée d'un curseur dans une file d'attente d'impression de pages, chaque fois que l'opérateur frappe la touche d'impression au cours de l'exécution de l'étape (a),

c) le chargement d'un programme d'un ensemble de tâches d'impression lorsque la création ou la révision du document est terminée,

d) l'obtention des informations d'identification de pages emmagasinées dans la file d'attente d'impression de pages à l'étape (b),

e) l'impression séquentielle de pages de document correspondant aux informations d'identification de pages emmagasinées dans ladite file d'attente d'impression de pages à l'étape (b) sur la base "premier entré, premier sorti".

2. Méthode selon la revendication 1 caractérisée en ce que lesdites informations d'identification de pages comprennent le nom du document, le disque sur lequel est emmagasiné ledit document et le numéro de la page du document à imprimer.

3. Méthode selon la revendication 1 ou 2 caractérisée en ce que ladite file d'attente d'impression de pages est emmagasinée dans la mémoire du système pendant la création ou la révision d'un document et est récupérée de ladite mémoire du système après que lesdites tâches d'impression aient été chargées.

4. Méthode selon l'une quelconque des revendications 1 à 3 caractérisée en ce que la file d'attente d'impression contient des informations désignant jusqu'à 25 pages désignées à imprimer.

5. Méthode selon la revendication 4 caractérisée en ce que lesdites pages désignées peuvent être dans un ordre aléatoire ou dans l'ordre séquentiel des pages du document.

FIG. 1

FIG. 2

FIG. 3

PRINT TASK OVERLAY — 54.

LOAD PRINT TASK PROGRAMS — 56

INITIALIZE BACKGROUND PRINT PROCESS — 58 ---> (60)

62 — ANY QUEUED PAGES ?

YES → REQUEST BACKGROUND PRINT TO PRINT — 64

NO

PRINT TASKS MENU — 66

| ID | ITEM |
|----|------|
| A | PRINT DOCUMENT |
| B | |
| • | • |
| • | • |
| • | • |
| G | GO TO TASK SELECTION |

A-F

G

SUBMIT REQUESTS TO BACKGROUND PRINT — 68

OBTAIN PRINT QUEUE INFORMATION — 70

72 — ANY DOCUMENTS QUEUED TO PRINTER ?

YES → MESSAGE POSTED "PRINTER BUSY" — 74

NO

EXIT FROM PRINT TASKS — 75

(76)

*FIG. 4*

3

*FIG. 5*